# DEMANDE DE BREVET EUROPEEN

(11) **EP 3 231 673 A1**
(43) Date de publication de la demande: **18.10.2017**
(21) Numéro de dépôt: 17162609.6
(22) Date de dépôt: 23.03.2017
(51) Int. Cl.: B60S 1/52, B60S 1/38, B60S 1/40

(54) **SYSTÈME D'ESSUYAGE D'UN PARE-BRISE DE VÉHICULE**

(30) Priorité: 13.04.2016 FR 1653279
(71) Demandeur: Valeo Systèmes d'Essuyage, 78322 Le Mesnil Saint Denis (FR)
(72) Inventeur: CAILLOT, Gérald, 78322 LE MESNIL SAINT DENIS (FR)
(74) Mandataire: Vincent, Catherine Marie Marguerite

(57) **Abrégé**

Système d'essuyage d'une surface vitrée de véhicule comprenant :
- un balai d'essuie-glace (110) comprenant un connecteur (124),
- un bras d'entraînement (112) pour entraîner le balai d'essuie-glace (110), le bras d'entraînement (112) comprenant au moins un moyen d'articulation autorisant une rotation du connecteur (124) par rapport au bras d'entraînement (112),
- une pièce de liaison (23) en contact avec le connecteur (124) et positionnée sur le moyen d'articulation, ladite pièce de liaison (23) comprenant des moyens de projection de liquide vers la surface vitrée, caractérisé en ce que ladite pièce de liaison (23) est configurée pour suivre un mouvement du balai d'essuie-glace (110) sur la surface vitrée.

## Description

### DOMAINE TECHNIQUE

La présente invention concerne notamment un système d'essuyage d'un pare-brise de véhicule, du type comportant un balai d'essuie-glace et un bras d'entraînement de ce balai.

### ETAT DE L'ART

Typiquement, un balai d'essuie-glace d'un pare-brise de véhicule comprend un corps longitudinal et une lame d'essuyage, en général en caoutchouc, destinée à frotter contre la vitre du véhicule pour évacuer de l'eau en l'amenant en dehors du champ de vision du conducteur. Le balai comporte en outre une vertèbre longitudinale qui rigidifie la lame d'essuyage, de manière à favoriser l'application de cette lame sur le pare-brise. Le balai est porté par un bras qui est entraîné par un moteur dans un mouvement de va-et-vient angulaire. Le bras et le balai sont reliés ensemble par des moyens de connexion et d'articulation autour d'un axe, ces moyens comprenant notamment un connecteur qui est solidaire du corps du balai.

Il est connu d'équiper un véhicule de moyens de projection de liquide lave-glace sur le pare-brise, ces moyens de projection étant le plus souvent situés sur le capot ou sur la grille de baie du pare-brise. On a déjà proposé d'équiper un balai d'essuie-glace ou son bras d'entraînement avec des moyens de projection de liquide lave-glace. Pour optimiser la consommation en liquide lave-glace ainsi que les zones d'impact du liquide projeté sur le pare-brise, il est préférable que ces moyens de projection soient montés sur le balai plutôt que sur son bras d'entraînement. Les moyens de projection du balai sont alors alimentés en liquide lave-glace par des moyens d'amenée de liquide qui sont portés par le bras et qui comprennent en général un tuyau souple s'étendant le long du bras jusqu'aux moyens de projection du balai.

Cette technologie présente toutefois des inconvénients. En premier lieu, cette technologie est onéreuse car le balai et le bras sont tous les deux équipés de moyens de circulation de liquide lave-glace. Par ailleurs, lorsque la lame du balai est usée, c'est l'intégralité du balai qui est remplacé par un neuf même si ses moyens de circulation sont encore opérationnels, ce qui n'est pas économique. De plus, à chaque changement de balai, les moyens d'amenée du bras doivent être déconnectés des moyens de projection du balai, ce qui peut user les pièces de raccordement de ces moyens et générer des fuites de liquide lave-glace au bout de plusieurs opérations de remplacement de balai.

L'invention propose une solution simple, efficace et économique à au moins une partie de ces problèmes.

### EXPOSE DE L'INVENTION

L'invention propose un système d'essuyage d'une surface vitrée de véhicule comprenant :
- un balai d'essuie-glace comprenant un connecteur,
- un bras d'entraînement pour entraîner le balai d'essuie-glace, le bras d'entraînement comprenant au moins un moyen d'articulation autorisant une rotation du connecteur par rapport au bras d'entraînement,
- une pièce de liaison en contact avec le connecteur et positionnée sur le moyen d'articulation, ladite pièce de liaison comprenant des moyens de projection de liquide vers la surface vitrée, caractérisé en ce que la pièce de liaison est configurée pour suivre un mouvement du balai d'essuie-glace sur la surface vitrée.

L'invention est particulièrement avantageuse car elle permet de bénéficier des avantages liés aux moyens de projection de liquide lave-glace embarqués sur un balai d'essuie-glace, sans les inconvénients décrits dans ce qui précède. En effet, la pièce de liaison équipée des moyens de projection est configurée pour suivre les mouvements du balai, notamment autour d'un axe d'articulation entre le balai et le bras, lors de ses déplacements sur un pare-brise. Les moyens de projection sont donc comparables à des moyens embarqués sur le balai et permettent de bénéficier des avantages liés à cette technologie.

Par ailleurs, selon une réalisation, la pièce de liaison est montée mobile en rotation sur le bras, notamment directement sur celui-ci, et est portée par le bras lorsque le balai est séparé du bras. On comprend ainsi qu'il n'est pas nécessaire de déconnecter les moyens d'amenée de liquide des moyens de projection de la pièce de liaison lors d'un changement de balai d'essuie-glace, car ces moyens sont portés par le bras et la pièce de liaison. Les risques de fuites précités sont donc considérablement réduits. Enfin, le balai d'essuie-glace peut être d'un type classique dépourvu de moyens de projection de liquide lave-glace, et donc relativement peu onéreux.

La pièce de liaison est positionnée sur le moyen d'articulation dont est équipé le bras, notamment par enfilement d'au moins une partie de ce moyen dans un orifice de la pièce de liaison. La pièce de liaison est donc en contact physique direct avec le moyen d'articulation.

Selon une réalisation, le système d'essuyage comprend un moyen de retenu entre la pièce de liaison et le bras d'entraînement pour retenir la pièce de liaison sur le bras d'entraînement.

Dans le système selon l'invention, le moyen d'articulation comprend :
- un arbre transversal à une direction d'allongement du bras d'entraînement et engagé dans un logement du connecteur,
- un moyen de butée pour verrouiller la pièce de liaison sur le bras d'entraînement.

Le moyen de retenu et le moyen de butée sont disposés de part et d'autre de l'arbre, selon la direction longitudinale du bras d'entraînement,

L'invention a également pour objet un ensemble d'essuyage d'une surface vitrée de véhicule comprenant :
- un balai d'essuie-glace comprenant un connecteur,
- une pièce de liaison en contact avec le connecteur, la pièce de liaison comprenant au moins un orifice de passage d'un moyen d'articulation autorisant une rotation du balai d'essuie-glace par rapport à un bras d'entraînement, la pièce de liaison étant solidaire du balai d'essuie-glace pour suivre un mouvement du balai d'essuie-glace sur la surface vitrée.

Selon différentes caractéristiques de l'invention prises seules ou en combinaison, on pourra prévoir que :
- la pièce de liaison comprend au moins une échancrure destinée à recevoir un déflecteur de balai d'essuie-glace,
- la pièce de liaison comprend un moyen de retenu configuré pour retenir la pièce de liaison sur un bras d'entraînement du balai d'essuie-glace,
- le moyen de retenu est une patte qui comprend au moins une butée configurée pour coopérer avec le bras d'entraînement,
- le moyen de retenu est élastiquement déformable en flexion,
- les moyens de projection comprennent des orifices de projection de liquide, notamment de liquide lave-glace,
- la pièce de liaison est un capot configuré pour recouvrir au moins en partie ou en totalité le connecteur du balai d'essuie-glace.

L'invention a aussi pour objet un ensemble d'entraînement d'un balai d'essuie-glace de véhicule comprenant :
- un bras d'entraînement configuré pour entraîner le balai d'essuie-glace, le bras d'entraînement comprenant un moyen d'articulation autorisant une rotation du balai d'essuie-glace par rapport au bras d'entraînement,
- une pièce de liaison positionnée sur le moyen d'articulation, la pièce de liaison comprenant des moyens de projection de liquide vers la surface vitrée, caractérisé en ce que la pièce de liaison est destinée à être solidarisée du balai d'essuie-glace pour suivre un mouvement du balai d'essuie-glace.

Selon différentes caractéristiques de l'invention prises seules ou en combinaison, on pourra prévoir que :
- le moyen d'articulation comprend :
   - un arbre transversal à une direction d'allongement du bras d'entraînement et apte à s'engager par translation dans un logement situé sur le balai d'essuie-glace, notamment situé dans un connecteur équipant le balai d'essuyage, et
   - un moyen de butée pour verrouiller la pièce de liaison sur le bras d'entraînement.
- l'ensemble d'entraînement comprend un moyen de retenu entre la pièce de liaison et le bras d'entraînement pour retenir la pièce de liaison sur le bras d'entraînement,
- le moyen de retenu est une patte qui comprend au moins une butée configurée pour coopérer avec le bras d'entraînement,
- le moyen de retenu est élastiquement déformable en flexion,
- une paroi de la patte s'étend parallèlement, ou sensiblement parallèlement, à l'arbre,
- les moyens de projection comprennent des orifices de projection de liquide,
- la pièce de liaison comprend au moins un orifice de passage destiné à recevoir ledit arbre,
- la pièce de liaison est par exemple un capot capable de recouvrir entièrement un connecteur du balai d'essuyage. Ce capot peut être configuré pour recouvrir au moins en partie le connecteur du balai, notamment par logement de ce connecteur dans un volume intérieur de la pièce de liaison,
- la pièce de liaison peut comprendre au moins un orifice de passage de l'arbre qui définit l'axe d'articulation et qui est solidaire du bras. La pièce de liaison peut être munie d'un seul orifice de passage de l'arbre, ce qui permet de conserver un aspect esthétique convenable de la pièce de liaison du côté du flan latérale de la pièce de liaison opposé à celui qui reçoit l'orifice de passage.

Dans le cas où la pièce de liaison est un capot qui recouvre le connecteur du balai, l'orifice de la pièce de liaison est avantageusement alignée avec le logement du connecteur, lorsque la pièce de liaison est dans sa position de montage sur le connecteur,

Le moyen de retenu évoqué ci-dessus en rapport avec le système ou avec l'un ou l'autre des ensembles est un dispositif qui évite que la pièce de liaison ne se sépare du bras.

Le moyen de retenu est par exemple formé par une excroissance qui émerge de la pièce de liaison.

Le moyen de retenu garanti que l'un des orifices de la pièce de liaison reste en prise sur l'arbre du moyen d'articulation quand la pièce de liaison est translaté sur cet arbre.

La pièce de liaison peut ainsi comprendre au moins un orifice de passage d'un arbre qui définit l'axe d'articulation et qui est solidaire du bras. De préférence, l'arbre est fixé par l'une de ses extrémités sur le bras. La pièce de liaison peut être montée mobile directement sur le bras par insertion de cet arbre dans l'orifice de la pièce de liaison. Cet orifice est de préférence un orifice transversal, qui s'étend sensiblement perpendiculairement à un axe longitudinal de la pièce de liaisons.

Avantageusement, l'arbre du bras est centré et guidé dans un logement cylindrique d'un connecteur du balai. Le connecteur est solidaire du balai. Dans le cas où la pièce de liaison est un capot qui recouvre le connecteur du balai, l'orifice de la pièce de liaison est avantageusement aligné avec le logement du connecteur lorsque la pièce de liaison est dans sa position de montage sur le connecteur.

Cette technologie de fixation appelée couramment *side-lock* dans le domaine technique, comprend en général un arbre dont une extrémité est fixée à une extrémité du bras et qui est engagé par translation axiale dans un logement cylindrique du connecteur du balai. Le bras comprend en général des moyens de butée qui verrouille le balai vis-à-vis du bras.

Les moyens de butée du bras et/ou le moyen de retenu sont avantageusement configurés pour limiter la course de la pièce de liaison vis-à-vis du bras, en translation le long de l'axe défini par l'arbre et/ou en rotation autour de cet axe.

Ce moyen de butée ou ce moyen de retenu peut prendre la forme d'une patte qui s'étend parallèlement à l'axe dans lequel s'étend majoritairement l'arbre.

La patte ou au moins l'une des pattes précitées est de préférence élastiquement déformable, par exemple en flexion. Cette capacité de déformation élastique peut être utile pour démonter éventuellement la pièce de liaison du bras.

Dans le système ou dans les ensembles exposés dans le présent document, on comprend que la pièce de liaison est configurée pour suivre un mouvement du balai d'essuie-glace sur la surface vitrée, notamment en étant rendu solidaire du connecteur équipant le balai d'essuie-glace. Suivre le mouvement du balai d'essuie-glace sur la surface vitrée signifie que le balai d'essuie-glace est mobile en rotation autour d'un axe du moyen d'articulation, de manière à autoriser un degré de liberté en rotation par rapport au bras d'entraînement et ainsi suivre une évolution du galbe de la surface vitrée.

La présente invention concerne encore un procédé de montage d'un système d'essuyage tel que décrit ci-dessus, caractérisé en ce qu'il comprend les étapes consistant à :
a) déplacer la pièce de liaison, notamment en translation, le long de l'arbre, de façon à éloigner la pièce de liaison du bras d'entraînement, jusqu'à ce que le moyen de retenu soit au contact d'une surface d'une paroi interne du bras d'entraînement,
b) monter la pièce de liaison sur un connecteur du balai d'essuie-glace, et
c) déplacer la pièce de liaison et le balai d'essuie-glace, notamment en translation, le long de l'arbre, de façon à rapprocher la pièce de liaison et le balai d'essuie-glace du bras d'entraînement, en engageant l'arbre dans un logement situé sur le connecteur du balai.

Le procédé peut comprendre avant l'étape a), une étape 0) consistant à déplacer en rotation la pièce de liaison autour de l'axe le long duquel s'étend l'arbre, jusqu'à ce le moyen de retenu vienne en appui sur une surface interne d'une paroi supérieure du bras d'entraînement.

Le procédé peut comprendre après l'étape c), une étape d) consistant à déplacer en rotation la pièce de liaison autour de l'axe défini par l'arbre, jusqu'à ce que la pièce de liaison vienne en appui sur le moyen de butée du bras d'entraînement.

Le moyen de retenu et le moyen de butée sont disposés de part et d'autre de l'arbre, selon la direction longitudinale du bras d'entraînement, si bien que la rotation selon l'étape 0) est opéré dans un sens opposé à la rotation opéré à l'étape d).

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue en perspective éclatée d'un système d'essuyage de pare-brise selon la technique antérieure,
- la figure 2 est une vue en perspective partielle d'un système d'essuyage de pare-brise selon l'invention,
- les figures 3 à 5 sont d'autres vues en perspective partielles du système de la figure 2 et représentent des étapes d'un procédé de démontage et de séparation du balai du bras du système,
- la figure 6 est une vue en perspective partielle d'un bras d'entraînement d'un système d'essuyage, selon une variante de réalisation de l'invention, et
- les figures 7A et 7B sont des vues de dessous du bras de la figure 6 et représentent des étapes d'un procédé de montage d'un balai sur ce bras.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

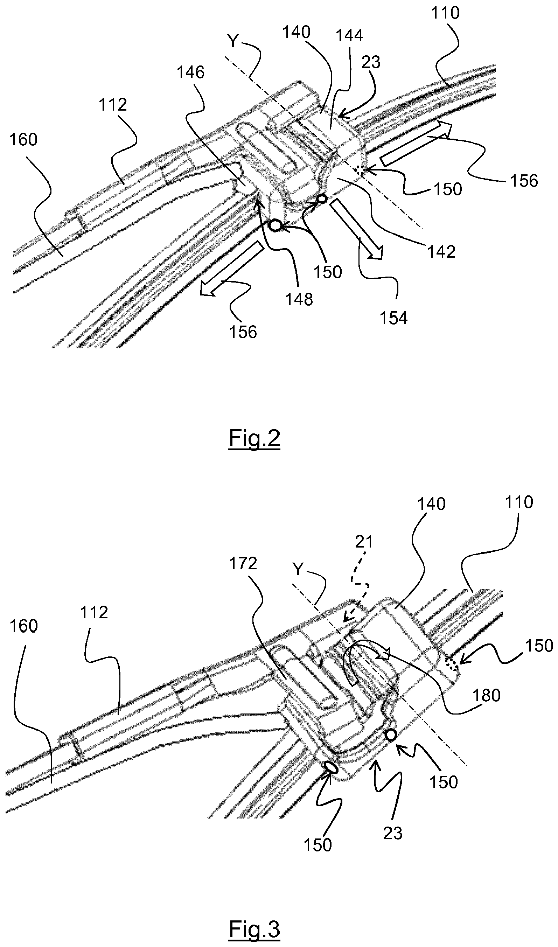

Dans la description qui suit, notamment pour la description des figures 2 à 7B, les dénominations longitudinales ou latérales sont relatives à l'orientation d'un bras d'entraînement d'un balai d'essuie-glace ou du balai d'essuie-glace. La direction longitudinale correspond à l'axe principal du bras ou du balai dans lequel il s'étend, alors que les directions latérales correspondent à des droites perpendiculaires à la direction longitudinale du bras ou du balai dans son plan. Pour les directions longitudinales, les dénominations extérieure ou intérieure s'apprécient par rapport au point de fixation du balai sur son bras d'entraînement, la dénomination intérieure correspondant à la partie où le bras et un demi-balai s'étendent. Enfin, les dénominations supérieures ou inférieures correspondent à des directions perpendiculaires au plan dans lequel s'étend le bras ou le balai, la dénomination inférieure contenant le plan de la surface vitrée.

Par les termes sensiblement parallèle ou sensiblement perpendiculaire/transversal, il est entendu qu'un degré de liberté de plus ou moins cinq degrés est admis.

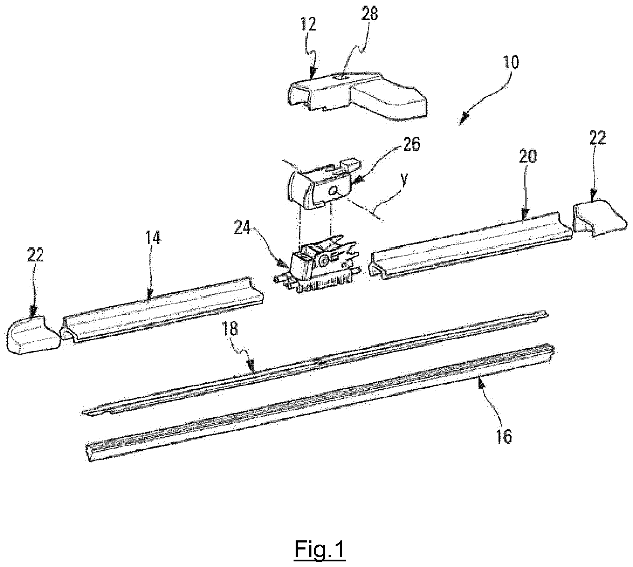

Il est illustré à la figure 1 un système d'essuyage selon l'art antérieur d'un pare-brise de véhicule, en particulier automobile. Ce système comprend un balai 10 d'essuie-glace du pare-brise et un bras 12 d'entraînement de ce balai, le bras 12 étant partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame longitudinale 16 d'essuyage, en général en caoutchouc, et au moins une vertèbre longitudinale 18 qui rigidifie la lame 16 et favorise son application sur le pare-brise.

Le corps 14 du balai 10 comporte un déflecteur aérodynamique supérieur 20 destiné à améliorer le fonctionnement du système, le but de ce déflecteur 20 étant d'améliorer le plaquage du balai 10 sur le pare-brise et donc la performance aérodynamique du système.

Le balai 10 comprend en outre des embouts ou agrafes d'accrochage 22 de la lame 16 et de la vertèbre 18 sur le corps, ces agrafes 22 étant situées à chacune des extrémités longitudinales du corps 14.

Le corps 14 du balai est ici réalisé en deux parties indépendantes qui sont disposées sensiblement bout à bout et raccordées l'une à l'autre par un connecteur 24 intermédiaire.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal dans lequel s'étend le corps 14 du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un type particulier de système d'essuyage qui est équipé de moyens de projection de liquide lave-glace sur une surface vitrée du véhicule, ces moyens de projection étant portés par ou formés sur une pièce de liaison qui est montée mobile en rotation sur le bras d'entraînement, autour de l'axe Y, de manière à ce que cette pièce puisse suivre les mouvements du balai d'essuie-glace. La pièce de liaison équipée des moyens de projection est configurée pour être portée par le bras lorsque le balai est séparé du bras.

La description ci-dessous présente un système d'essuyage selon l'invention, mais il est apparent que les caractéristiques communes au système et aux ensembles peuvent être appliquées à l'ensemble d'essuyage ou à l'ensemble d'entraînement.

Les figures 2 à 5 représentent un mode de réalisation du système d'essuyage selon l'invention, ce système comporte un balai d'essuie-glace 110 qui est ici un balai plat (de l'anglais *flat blade*) similaire à celui de la figure 1. Le système comprend aussi un bras 112 d'entraînement pour porter et entraîner en rotation le balai d'essuie-glace 110.

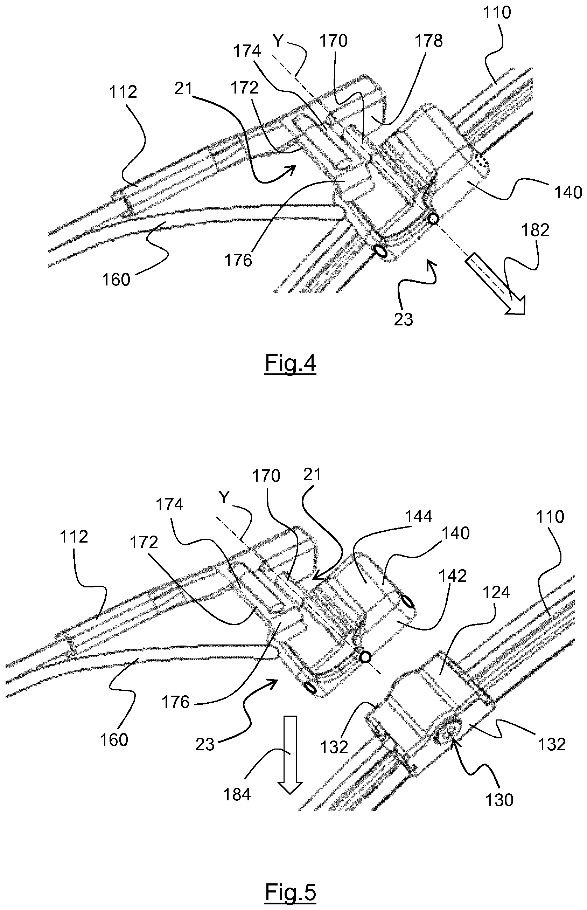

Comme décrit dans ce qui précède, le balai d'essuie-glace 110 comporte un connecteur 124 de liaison du balai d'essuie-glace 110 au bras d'entraînement 112.Le connecteur 124 a ici une forme générale parallélépipédique et comporte un logement cylindrique transversal 130. Le logement cylindrique est transversal dans le sens où il s'étend sensiblement perpendiculairement à l'axe longitudinal dans lequel s'étend le balai d'essuie-glace 110 (figure 5). Les extrémités longitudinales du logement 130 débouchent respectivement sur deux faces latérales 132 du connecteur 124, orientées dans des directions sensiblement opposées et sensiblement parallèles à l'axe longitudinal du balai 110. Le balai 110 peut comprendre les autres caractéristiques décrites ci-dessus en référence à la figure 1.

La pièce de liaison 23 portant les moyens de projection de liquide est ici destinée à coiffer le connecteur 124 du balai 110, notamment intégralement. La pièce de liaison 23 est ainsi en contact avec le connecteur 124.

La pièce de liaison 23 est par exemple un capot 140, qui lorsqu'il est monté sur le connecteur 124 comme illustrée aux figures 2 à 4) recouvre partiellement ou en totalité le connecteur 124. Le capot 140 a en section transversale une forme sensiblement en U renversé et comprend deux flancs latéraux 142 sensiblement parallèles. Les flancs latéraux 142 sont reliés à une paroi supérieure 144 du capot, par leurs bords longitudinaux supérieurs.

La distance ou dimension transversale (par rapport à l'axe longitudinal du balai) entre les flancs latéraux 142 du capot est supérieure à la largeur du connecteur 124 (ou à la distance ou dimension transversale entre les faces latérales 132 du connecteur), de façon à ce que le capot 140 puisse être monté sur le connecteur 124 de sorte que les flancs latéraux 142 du capot s'étendent sensiblement parallèlement et en regard des faces latérales 132 du connecteur, comme représenté aux figures 2 à 4. Autrement dit, dans la position de montage représentée aux figures 2 à 4, le connecteur 124 est logé dans une cavité interne, autrement appelé volume intérieur du capot 140, définie par sa paroi supérieure 144 et ses flancs latéraux 142.

La pièce de liaison 23 comprend au moins un moyen de fixation pour l'attacher au connecteur du balai d'essuie-glace. Selon un exemple de réalisation, le moyen de fixation prend la forme d'au moins un crochet de clippage ménagé sur un bord de la pièce de liaison 23 et capable d'agripper une arête du connecteur. Ainsi, la pièce de liaison 23 ou le capot 140 suit les mouvements du balai d'essuie-glace sur la surface vitrée, notamment les mouvements autour de l'axe de rotation Y.

Au moins un des flancs latéraux 142 du capot peut comprendre un orifice de passage 197 (visible uniquement sur les dessins 7A et 7B) qui, lorsque le capot 140 est monté sur le connecteur 124, est aligné sur l'axe du logement cylindrique 130 du connecteur. Cet orifice a une orientation sensiblement transversale par rapport à l'axe longitudinal du balai. Le flanc latéral opposé à celui qui reçoit l'orifice peut être dépourvu d'orifice.

Le capot 140 peut également avoir en section longitudinale une forme sensiblement en U renversé et comprendre deux flancs d'extrémité 146 qui sont sensiblement parallèles entre eux et reliés à la fois à la paroi supérieure 144 et aux flancs latéraux 142.

La distance ou dimension longitudinale entre les flancs d'extrémité 146 du capot 140 est supérieure à la longueur du connecteur 124, de façon à ce que le capot 140 puisse être monté sur le connecteur 124, comme expliqué dans ce qui précède.

Les flancs d'extrémité 146 du capot peuvent comprendre des échancrures 148 formées pour recevoir des parties de déflecteur du balai 110, comme cela est visible en figure 2.

Le capot 140 comprend des moyens de projection de liquide, notamment de liquide lave-glace, qui comprennent au moins des orifices de projection 150 destinés à être orientés vers la surface vitrée du véhicule, telle que le pare-brise ou la lunette arrière. Ces orifices de projection 150 peuvent déboucher au niveau d'au moins l'un des flancs latéraux 142 du capot 140, comme cela est schématiquement représenté dans les dessins. Dans le cas où un seul des flancs latéraux 142 est équipé des orifices de projection 150, ces derniers sont de préférence situés du côté du sens montant de déplacement du système d'essuyage sur le pare-brise. Le flanc latéral 142 équipé des orifices de projection 150 peut être le flanc latéral opposé à celui comportant l'orifice précité destiné à être aligné avec le logement 130 du connecteur 124.

Dans le cas où les deux flancs latéraux 142 sont équipés de tels orifices 150, ils sont alors aptes à projeter du liquide lorsque le balai 110 se déplace dans le sens montant et dans le sens descendant. Dans l'exemple représenté, le ou chaque flanc latéral 142 est équipé de trois orifices de projection 150 dont un est situé sensiblement au milieu du flanc latéral 142 et orienté pour projeter du liquide vers la surface vitrée dans une direction sensiblement perpendiculaire à l'axe longitudinal du balai (flèche 154 en figure 2), et dont les deux autres orifices de projection 150 sont situés respectivement aux deux extrémités longitudinales du flanc latéral 142 et sont orientés pour projeter du liquide vers la surface vitrée dans des directions sensiblement opposées et parallèles à l'axe longitudinal du balai (flèche 156 en figure 2).

En variante, les orifices de projection 150 peuvent être remplacés par des gicleurs ou des buses de pulvérisation de liquide.

Les orifices de projection 150 sont alimentés en liquide lave-glace par des moyens d'amenée de liquide qui comprennent ici un tuyau 160 souple, par exemple en caoutchouc, qui s'étend le long du bras 112 et qui est fixé à celui-ci par des moyens appropriés. Une extrémité du tuyau 160 est reliée à la pièce de liaison 23, cette dernière pouvant comprendre un manchon de réception de ce tuyau.

Le bras d'entraînement 112 a une forme allongée et comprend un moyen d'articulation 21 à son extrémité libre. Le moyen d'articulation 21 autorise une rotation d'un certain angle du balai d'essuie-glace autour de l'axe de rotation Y. Le moyen d'articulation 21 comprend un arbre 170 cylindrique et transversal à la direction longitudinale dans laquelle s'étend le bras d'entraînement 112. Cet arbre 170 définit l'axe Y de rotation du balai 110 vis-à-vis du bras 112. Comme cela est visible dans les dessins, l'arbre 170 et l'axe Y sont sensiblement perpendiculaires à l'axe longitudinal du bras d'entraînement 112 et du balai d'essuie-glace 110, lorsque ce dernier est monté sur le bras.

L'arbre 170 est fixé à l'une de ses extrémités longitudinales sur le bras 112 et est configuré pour être engagé par coulissement dans le logement cylindrique 130 du connecteur 124 situé sur le balai 110, en traversant l'orifice précité de l'un des flancs latéraux 142 du capot 140. Le capot 140 est ainsi positionné, notamment enfilé sur l'arbre 170. Cet engagement est réalisé par une translation du balai 110 et du capot 140 monté sur le connecteur 124 du balai 110 vers le bras d'entraînement 112, dans une direction parallèle à l'axe Y, notamment confondu à l'axe Y de rotation (figures 2 et 3).

L'engagement de l' arbre 170 dans le connecteur 124 situé sur le balai d'essuie-glace 110 permet d'autoriser une rotation du capot 140 ainsi que du balai d'essuie-glace 110 autour de l'axe de rotation Y. Cet engagement permet également de verrouiller le balai d'essuie-glace 110 vis-à-vis du capot 140, et le capot 140 vis-à-vis du balai 110.

Le bras 112, notamment son moyen d'articulation 21, comprend en outre des moyens de butée. Ces moyens de butées sont également situés à l'extrémité libre du bras 112. Le moyen de butée est par exemple une patte transversale 172 destinée à coopérer avec le capot 140 pour verrouiller le capot 140 ainsi que le balai 110 vis-à-vis du bras d'entraînement 112.

La patte transversale 172 a une forme générale en L et présente une première paroi transversale 174 s'étendant depuis le bras sensiblement parallèlement à l'arbre 170, à distance de celui-ci. La patte transversale 172 présente une deuxième paroi 176 reliée à la première paroi 174, au niveau de son extrémité libre. La deuxième paroi 176 forme un rebord de butée 176. Par exemple, le rebord de butée 176 forme un angle droit avec la première paroi 174. Dans l'exemple représenté, la patte transversale est reliée par l'une de ses extrémités à un bord supérieur du bras d'entraînement 112, son extrémité opposée étant reliée au rebord 176 qui s'étend vers le bas, c'est-à-dire du côté opposé au bord supérieur précité du bras.

Dans le cas où la partie d'extrémité du bras d'entraînement 112 comportant l'arbre 170 et la patte 172 présente une face latérale 178 relativement plane et sensiblement parallèle à l'axe longitudinal du bras, le rebord 176 peut être considéré comme étant sensiblement parallèle à cette face latérale 178 (figure 4).

La patte transversale 172 a une longueur ou dimension transversale (par rapport à l'axe longitudinal du bras) qui est supérieure à celle du capot 140, mesuré selon une même direction, de façon à ce que le capot puisse être intercalé entre le bras 112 et le rebord 176 de la patte, et que cette dernière puisse venir en appui ou du moins s'étendre au-dessus de la paroi supérieure 144 du capot, comme cela est visible en figure 2. Ainsi, la patte transversale 172 permet un blocage en rotation de la pièce de liaison 23 et du balai 110 autour de l'axe Y, au-delà d'une certaine plage de valeur d'angle prédéterminée. La patte transversale 172 permet également un blocage transversal de la pièce de liaison 23.

Dans la position représentée en figure 2, le balai 110 et le capot 140 sont verrouillés vis-à-vis du bras d'entraînement 112 notamment par la patte transversale 172 et son rebord de butée 176, ce dernier prenant appui sur le flanc latéral 142 du capot opposé au bras d'entraînement 112 de façon à bloquer en translation le capot et le balai le long de l'axe Y.

La figure 2 représente le système d'essuyage selon l'invention en position de fonctionnement, le balai 110 étant connecté au bras 112 et verrouillé par rapport à celui-ci. Les figures 3 à 5 représentent, dans cet ordre, des étapes de démontage du balai du bras, en vue par exemple du remplacement du balai par un neuf par exemple.

Lors d'une première étape représentée en figure 3, le balai d'essuie-glace 110 est déplacé en rotation autour de l'axe Y vis-à-vis du bras d'entraînement 112 (flèche 180), de façon à l'éloigner de la patte 172 du bras, et jusqu'à ce que le rebord 176 de cette patte ne soit plus en regard du flanc latéral 142 du capot et ne puisse donc plus coopérer avec celui-ci. L'angle de pivotement du balai peut être de l'ordre de 20° à 40° environ. Le capot 140, qui est solidaire du connecteur 124, suit le déplacement du balai sur la surface vitrée. Le tuyau 160 est souple et autorise le pivotement du capot 140 en se déformant élastiquement.

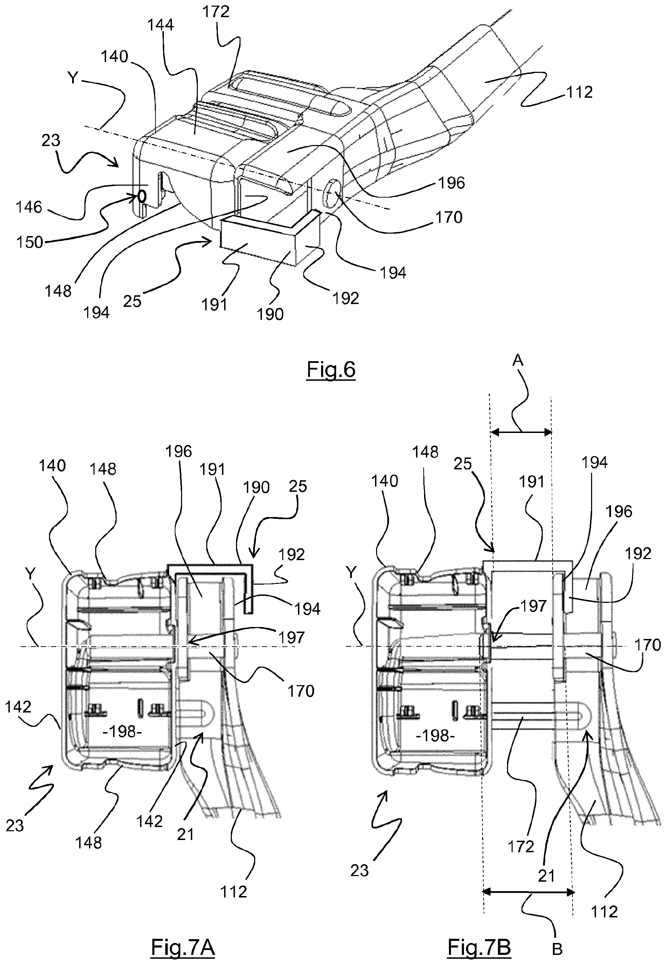

Lors d'une autre étape représentée en figure 4, le balai 110 est déplacé en translation le long de l'axe Y pour l'éloigner du bras 112 (flèche 182), et jusqu'à ce que l'arbre 170 situé sur le bras d'entraînement 112 soit retiré du logement 130 situé sur le connecteur 124 du balai d'essuie-glace 110. La distance de ce déplacement est notamment fonction de la longueur de l'arbre 170. Une fois l'arbre 170 sorti du logement 130 du connecteur 124, le connecteur 124 peut être séparé du capot 140 par translation axiale du balai 110 dans une direction sensiblement perpendiculaire à l'axe longitudinal du bras ou du balai 110 (flèche 184 en figure 5). On constate dans cette figure 5 que le capot 140 reste sur le bras lorsque le balai est démonté et retiré du bras. C'est ici l'engagement de l'arbre 170 dans l'orifice de passage 197 (visible en figure 7A, 7B) du capot 140 qui assure la retenue du capot vis-à-vis du bras d'entraînement 112, le capot 140 étant en outre relié au tuyau 160. On constate en outre que le capot 140 est monté directement pivotant sur le bras 112, encore par l'engagement de l'arbre 170 dans l'orifice du capot 140.

Le balai 110 préalablement démonté ou un balai neuf peut être monté sur le bras 112 en répétant les opérations précitées en sens inverse. Plus précisément, le connecteur 124 du balai est engagé dans le volume intérieur du capot 140, par translation axiale du balai vers le capot 140 dans une direction sensiblement perpendiculaire à l'axe longitudinal du bras d'entraînement.

En position représentée en figure 4, le capot 140 recouvre le connecteur 124 du balai 110. L'arbre 170 du bras d'entraînement 112 est engagé dans le logement 130 du connecteur 124 par translation axiale du balai le long de l'axe Y vers le bras d'entraînement 112, jusqu'à ce que le capot 140 prenne appui latéralement via son flanc latéral 142 comportant l'orifice de passage de l'arbre 170, sur la face latérale 178 du bras 112. Le balai 110 est ensuite déplacé en rotation autour de l'axe Y (figure 3), jusqu'à ce que la paroi 144 du capot vienne en appui sur la patte transversale 172. Dans cette position représentée en figure 2, le rebord de butée 176 de la patte transversale 172 verrouille le capot 140 et donc le balai 110 vis-à-vis du bras d'entraînement 112, le long de l'axe Y. Le capot 140 peut alors être attaché au connecteur 124, notamment en le clippant sur ce dernier. C'est ainsi que la pièce de liaison 23 est solidaire du connecteur 124 du balai d'essuie-glace 110.

Les figures 6, 7A et 7B représentent une variante de réalisation de l'invention qui comprend, en plus des caractéristiques décrites dans ce qui précède en référence aux figures 2 à 5, des moyens de retenu 25 de la pièce de liaison 23 sur le bras d'entraînement. Ces moyens de retenu 25 peuvent être portés par la pièce de liaison 23 et sont destinés à coopérer avec le bras 112. Ces moyens de retenu 25 peuvent également être portés par le bras d'entraînement 112 et sont destinés à coopérer avec la pièce de liaison 23.

Les moyens de retenu 25 peuvent être venus de matière avec la pièce de liaison 23 ou avec le bras d'entraînement 112.

Ces moyens de retenu comprennent ici une patte latérale 190. Dans le cas illustré, la patte latérale 190 est portée par le capot 140 à une extrémité longitudinale de celui-ci. La patte latérale 190 s'étend ici vers un côté du capot 140 sensiblement dans le prolongement d'un flanc d'extrémité 146 de celui-ci. La patte latérale 190 est parallèle, ou sensiblement parallèle, à ce flanc d'extrémité 146 et est donc sensiblement parallèle à l'arbre 170 du bras 112 et à l'axe Y de rotation du capot 140 vis-à-vis du bras 112, en position de montage.

La patte latérale 190 émerge de l'extrémité longitudinale du capot 140 qui est destinée à être située au niveau de l'extrémité libre du bras 112, lorsque le capot 140 est dans la position de fonctionnement représentée en figure 6. Dans cette position, la patte latérale 190 s'étend en avant (ou à l'extérieur) de l'extrémité libre du bras 112. Cette extrémité libre du bras 112 a en section une forme en U renversé et comprend deux parois latérales 194 sensiblement parallèles et reliées entre elles par une paroi supérieure 196.

La patte latérale 190 a une forme générale en L et présente une première paroi 191 et une deuxième paroi 192 formant une butée. La deuxième paroi 192 forme par exemple un angle droit avec la première paroi 191. La butée formée par la deuxième paroi 192 est destinée à coopérer avec l'extrémité du bras 112.

La deuxième paroi 192 est ainsi configurée pour venir en butée sur une face latérale interne d'une paroi latérale 194 du bras, comme cela est visible en figure 7B. Cette mise en contact permet de limiter un déplacement en translation du capot 140 le long de l'axe Y vis-à-vis du bras d'entraînement 112. Ce déplacement est ainsi défini d'une part par cette coopération entre la deuxième paroi 192 de la patte latérale 190 et le bras 112 et d'autre part par la butée du capot 140 sur la paroi latérale 194 du bras 112.

Par ailleurs, la première paroi 191 de la patte latérale 190 présente une longueur A toujours inférieure à une longueur B correspondant à une longueur libre de l'arbre 170 sur laquelle le capot 140 peut venir s'insérer. Ainsi, la longueur A de la paroi 191 est telle qu'elle permet dans tous les cas d'empêcher le capot 140 de se désolidariser du bras d'entraînement 112. La longueur A de la première paroi 191 et la longueur B de l'arbre 170 sont mesurées le long de directions parallèles entre elles.

Selon une variante de réalisation, la deuxième paroi 192 est configurée pour venir frotter sur une face inférieure de la paroi 196 du bras 112 lors de son mouvement de translation. Ceci permet de limiter la course en rotation du capot 140 autour de l'axe Y vis-à-vis du bras pendant la phase de démontage du balai d'essuie-glace. La course en rotation est ainsi définie d'une part par cette coopération entre la deuxième paroi 192 de la patte latérale 190 et le bras 112 et d'autre part par la coopération de la paroi supérieure 144 du capot avec la patte transversale 172 portée par le bras 112. Les pattes transversale 172 et latérale 190 peuvent autoriser un débattement angulaire de 90° par exemple autour de l'axe Y, quand le moyen de retenu 25 est inactif. Plus précisément, le débattement angulaire autorisé par la patte latérale 190 est supérieur au débattement angulaire minimal nécessaire pour autoriser la libération du capot 140 vis-à-vis de la patte transversale 172.

La position de fonctionnement du capot 140 représentée en figure 6 correspond à celle représentée en figure 2. La position du capot 140 représentée dans la vue de la figure 7A correspond à celle représentée en figure 3 dans laquelle le capot 140 a été déplacé en rotation autour de l'axe Y, le rebord 192 de la patte 190 étant en appui sur la face inférieure de la paroi 196 du bras 112. La position du capot 140 représentée dans la vue de la figure 7B correspond à celle représentée en figure 4, dans laquelle le capot est éloigné du bras et que le balai d'essuie-glace a été retiré. On peut apprécier dans les vues des figures 7A et 7B la position de l'orifice 197 du capot 140, de passage de l'arbre 170 du bras d'entraînement 112. On peut également constater que, dans la position représentée dans la vue de la figure 7B, l'arbre 170 laisse libre le volume intérieur 198 du capot 140 et autorise ainsi l'insertion du connecteur 124 du balai dans ce volume intérieur 198, ou son retrait.

Dans les figures 6, 7A et 7B, les moyens d'amenée de liquide lave-glace et les moyens de projection de ce liquide portés par le capot 140 n'ont pas été représentés pour plus de clarté.

## Revendications

1. Système d'essuyage d'une surface vitrée de véhicule comprenant :
- un balai d'essuie-glace (110) comprenant un connecteur (124),
- un bras d'entraînement (112) pour entraîner le balai d'essuie-glace (110), le bras d'entraînement (112) comprenant au moins un moyen d'articulation (21) autorisant une rotation du connecteur (124) par rapport au bras d'entraînement (112),
- une pièce de liaison (23) en contact avec le connecteur (124) et positionnée sur le moyen d'articulation (21), la pièce de liaison (23) comprenant des moyens de projection de liquide vers la surface vitrée, **caractérisé en ce que** la pièce de liaison (23) est configurée pour suivre un mouvement du balai d'essuie-glace (110) sur la surface vitrée.

2. Système selon la revendication 1, **caractérisé en ce qu'**il comprend un moyen de retenu (25) entre la pièce de liaison (23) et le bras d'entraînement (112) pour retenir la pièce de liaison sur le bras d'entraînement (112).

3. Système selon la revendication 1 ou 2, caractérisé en ce le moyen d'articulation (21) comprend :
- un arbre (170) transversal à une direction d'allongement du bras d'entraînement (112) et engagé dans un logement (130) du connecteur (124),
- un moyen de butée pour verrouiller la pièce de liaison (23) sur le bras d'entraînement (112).

4. Ensemble d'essuyage d'une surface vitrée de véhicule comprenant :
- un balai d'essuie-glace (110) comprenant un connecteur (124),
- une pièce de liaison (23) en contact avec le connecteur (124), la pièce de liaison (23) comprenant des moyens de projection de liquide vers la surface vitrée, **caractérisé en ce que** la pièce de liaison (23) comprend au moins un orifice de passage (197) d'un moyen d'articulation (21) autorisant une rotation du balai d'essuie-glace (110) par rapport à un bras d'entraînement (112), la pièce de liaison (23) étant solidaire du balai d'essuie-glace (110) pour suivre un mouvement du balai d'essuie-glace (110) sur la surface vitrée.

5. Ensemble selon la revendication 4, **caractérisé en ce que** la pièce de liaison (23) comprend un moyen de retenu (25) configuré pour retenir la pièce de liaison (23) sur un bras d'entraînement (112) du balai d'essuie-glace (110).

6. Ensemble selon la revendication 5, **caractérisé en ce que** le moyen de retenu (23) est une patte latérale (190) qui comprend au moins une butée configurée pour coopérer avec le bras d'entraînement (112).

7. Ensemble selon la revendication 5 ou 6, **caractérisé en ce que** le moyen de retenu (25) est élastiquement déformable en flexion.

8. Ensemble selon l'une quelconque des revendications précédentes, **caractérisé en ce que** la pièce de liaison (23) est un capot (140) configuré pour recouvrir au moins en partie le connecteur (124) du balai d'essuie-glace (110).

9. Ensemble d'entraînement d'un balai d'essuie-glace (110) de véhicule comprenant :
- un bras d'entraînement (112) configuré pour entraîner le balai d'essuie-glace (110), le bras d'entraînement (112) comprenant un moyen d'articulation (21) autorisant une rotation du balai d'essuie-glace (110) par rapport au bras d'entraînement (112),
- une pièce de liaison (23) positionnée sur le moyen d'articulation (21), la pièce de liaison (23) comprenant des moyens de projection de liquide vers la surface vitrée, **caractérisé en ce que** la pièce de liaison (23) est destinée à être solidarisée au balai d'essuie-glace (110) pour suivre un mouvement du balai d'essuie-glace (110) sur la surface vitrée.

10. Ensemble selon la revendication 9, **caractérisé en ce que** le moyen d'articulation (21) comprend :
- un arbre (170) transversal à une direction d'allongement du bras d'entraînement (112) et apte à s'engager dans un logement (130) situé sur le balai d'essuie-glace (110),
- un moyen de butée (172) pour verrouiller la pièce de liaison sur le bras d'entraînement (112).

11. Ensemble selon la revendication 9 ou 10, **caractérisé en ce qu'**il comprend un moyen de retenu (25) pour retenir la pièce de liaison (23) sur le bras d'entraînement (112).

12. Ensemble selon la revendication 11, **caractérisé en ce que** le moyen de retenu (25) est une patte latérale (190) qui comprend au moins une butée configurée pour coopérer avec le bras d'entraînement (112).

13. Ensemble selon la revendication 12, **caractérisé en ce que** le moyen de retenu (25) est élastiquement déformable en flexion.

14. Ensemble selon les revendications 12 ou 13 prise en combinaison avec la revendication 11, **caractérisé en ce qu'**une première paroi (191) de la patte latérale (190) s'étend sensiblement parallèlement à l'arbre (170).

15. Ensemble selon l'une quelconque des revendications 9 à 14, **caractérisé en ce que** la pièce de liaison (23) comprend au moins un orifice de passage (197) destiné à recevoir l'arbre (170).

16. Ensemble selon l'une quelconque des revendications 9 à 15, **caractérisé en ce que** la pièce de liaison (23) est un capot (140) configuré pour recouvrir au moins en partie un connecteur (124) du balai d'essuie-glace (110).

17. Ensemble selon l'une quelconque des revendications 4 à 8 ou ensemble selon l'une quelconque des revendications 9 à 16, **caractérisé en ce que** les moyens de projection comprennent des orifices (150) de projection de liquide.

18. Procédé de montage d'un système d'essuyage selon la revendication 3 combiné à la revendication 2, **caractérisé en ce qu'**il comprend les étapes consistant à :
a) déplacer la pièce de liaison (23) en translation le long d'un axe (Y) défini par l'arbre (170), de façon à éloigner la pièce de liaison (23) du bras d'entraînement (112), jusqu'à ce que le moyen de retenu (25) soit au contact d'une surface d'une paroi latérale (194) du bras d'entraînement (112),
b) monter la pièce de liaison (23) sur le connecteur (124) du balai d'essuie-glace (110), et
c) déplacer la pièce de liaison (23) et le balai d'essuie-glace (110) le long de l'axe (Y) défini par l'arbre (170), de façon à rapprocher la pièce de liaison (23) et le balai (110) du bras d'entraînement (112), et à engager l'arbre (170) dans un logement (130) situé sur le connecteur (124) du balai (110).

19. Procédé selon la revendication 18, **caractérisé en ce qu'**il comprend, avant l'étape a), une étape consistant à déplacer en rotation la pièce de liaison (23) autour de l'axe (Y) défini par l'arbre (170) jusqu'à ce que le moyen de retenu (25) vienne en appui sur une surface interne d'une paroi supérieure (196) du bras d'entraînement (112).

20. Procédé selon la revendication 18 ou 19, **caractérisé en ce qu'**il comprend, après l'étape c), une étape consistant à déplacer en rotation la pièce de liaison (23) autour de l'axe (Y) défini par l'arbre (170), jusqu'à ce que la pièce de liaison (23) vienne en appui sur le moyen de butée (172) du bras d'entraînement (112).
